# EUROPÄISCHE PATENTANMELDUNG

(11) **EP 0 626 327 A1**
(43) Veröffentlichungstag der Anmeldung: **30.11.1994**
(21) Anmeldenummer: 94107086.4
(22) Anmeldetag: 06.05.1994
(51) Int. Cl.: B65G 47/71

(54) **Vorrichtung zum Umformen eines schmalen einspurigen Behälterstromes in einen breiten Behälterstrom**

(30) Priorität: 21.05.1993 DE 4317069
(71) Anmelder: KHS Maschinen- und Anlagenbau Aktiengesellschaft, D-47057 Duisburg (DE)
(72) Erfinder: Scherer, Heinz-Jürgen, D-55452 Windesheim (DE)

(57) **Zusammenfassung**

Die Erfindung bezieht sich auf eine Vorrichtung zum Umformen eines schmalen einspurigen Behälterstromes (A) in einen breiten Behälterstrom (B). Die Vorrichtung besitzt hierfür zwischen einem Zuförderer (1) und einem Abförderer (3) einen Umformbereich (2'''), der von einer Vielzahl von seitlich aneinander anschließenden Förderbändern (10-19;33-35;36-41) gebildet ist, an dem zunächst an einer Verzögerungsstrecke (2'') eine Verzögerung der Behälter (4) in der Weise erfolgt, daß diese in einem einspurigen Behälterstrom (A) unmittelbar aneinander anschließen, und an dem dann entlang eines schrägen Führungsgeländers (5) auf einer Umformstrecke (2''') die Formierung des breiten Behälterstromes (B) erfolgt. Die Förderbänder (10-19) zumindest der Umformstrecke (2''') sind schmale Förderbänder mit einer mehrfach gestaffelten Fördergeschwindigkeit.

## Beschreibung

Die Erfindung bezieht sich auf eine Vorrichtung gemäß Oberbegriff Patentanspruch 1.

Eine Vorrichtung dieser Art ist grundsätzlich bekannt (Handbuch für Etikettiertechnik der Firma Hermann Kronseder, Seite 206, Abb. 8b) und wird auch als Auseinanderführung bezeichnet.

Bei der bekannten Vorrichtung werden die Behälter über den Zuförderer als einspuriger Behälterstrom zugeführt, in dem die Behälter noch den Maschinenabstand voneiander aufweisen. Am Umformbereich erfolgt zunächst entlang eines Führungsgeländers, welches sich schräg über einen Transportbereich erstreckt, der von einer Vielzahl paralleler und aneinander anschließender Förderbänder gebildet ist, eine Verzögerung der Behälter derart, daß sich zunächst ein einspuriger Flaschenstrom ergibt, in dem die Behälter nicht mehr voneinander beabstandet sind. Auf einer Umformstrecke, die im bekannten Fall an dem gleichen Führungsgeländer wie die Verzögerungsstrecke gebildet ist, erfolgt dann unter weiterer Verzögerung der Behälter eine Formierung dieser Behälter zu einem zweispurigen Behälterstrom, der über den Abförderer abgeführt wird.

Bekannt ist weiterhin eine Vorrichtung zum Umformen eines einspurigen Behälterstromes in einen mehrspurigen Behälterstrom (DE-OS 38 23 228), bei dem die Behälter einem Umformbereich zugeführt werden, der von einer Vielzahl von schmalen Förderbändern gebildet ist, die jeweils mit unterschiedlicher Geschwindigkeit derart angetrieben werden, das sich am Umformbereich eine zum Abförderer hin abnehmende Fördergeschwindigkeit ergibt. Das Formieren der Behälter zu dem mehrspurigen Behälterstrom erfolgt bei dieser bekannten Vorrichtung aber nicht an einem schräg zu einem Transportbereich verlaufenden Führungsgeländer.

Bekannt ist schließlich auch eine Vorrichtung zum Umformen eines einspurigen Behälterstromes in einen mehrspurigen Behälterstrom (DE-OS 27 27 278). Bei dieser bekannten Vorrichtung ist zwischen dem Zuförderer und dem Abförderer eine Förderstrecke vorgesehen, an der die Behälter entlang eines Führungsgeländers nicht verzögert, sondern beschleunigt werden. Angestrebt ist hierbei, eine Schubwirkung auf die Behälter der sich am Geländer ausbildenden Behälterreihe auszuüben, damit die Behälter sich dann am Ende des Führungsgeländers wolken- oder traubenartig auch in Richtung der Breite des Abförderers verteilen. Für diese Verteilung reicht das Führungsgeländer mit einem Ende weit in den Abförderer zwischen dessen Längsseiten hinein.

Aufgabe der Erfindung ist es, eine Vorrichtung der eingangs erwähnten Art dahingehend weiter zu entwickeln, daß mit ihr besonders schonend bzw. stoßfrei und damit besonders geräuscharm ein einspuriger Behälterstrom in den mehrspurigen Behälterstrom umwandelbar ist, und zwar auch dann, wenn dieser mehr als zwei Spuren aufweist.

Zur Lösung dieser Aufgabe ist eine Vorrichtung entsprechend dem kennzeichnenden Teil des Patentanspruches 1 ausgebildet.

Bei der erfindungsgemäßen Vorrichtung erfahren die Behälter nach der Verzögerungsstrecke auf der Umformstrecke eine mehrstufige Verzögerung, so daß sich zusätzlich zur primären Behälterreihe am zweiten Führungsgeländer durch seitliches Verdrängen von Behältern weitere, d.h. sekundäre Behälterreihen bilden, aus denen dann ihrerseits durch die Abnahme der Fördergeschwindigkeit wiederum Behälter seitlich verdrängt werden, die weitere, sekundäre Behälterreihen bilden usw. Auf kurzer Strecke formiert sich somit aus dem ursprünglich einspurigen Behälterstrom der mehrspurige Behälterstrom.

Bei einer bevorzugten Ausführung der Erfindung sind zumindest ein Teil der Förderbänder der Umformstrecke und dabei zumindest solche Förderbänder, die die von der Fördergeschwindigkeit des Abförderers abweichenden abgestuften Fördergeschwindigkeiten aufweisen, schmale Förderbänder, so daß sich auch in Richtung quer zum zweiten Führungsgeländer eine mehrfache Abstufung der Fördergeschwindigkeit derart ergibt, daß den Behältern mit zunehmendem Abstand vom Geländer eine verminderte Fördergeschwindigkeit aufgeprägt wird. Hierdurch wird erreicht, daß aus einer Behälterreihe seitlich verdrängte Behälter gegenüber den in dieser Behälterreihe verbleibenden Behältern etwas zurückbleiben, wodurch sich eine Auflockerung des Behälterstromes ergibt und vor allem auch die Möglichkeit geschaffen wird, daß aus der gleichen Behälterreihe noch weitere Behälter seitlich verdrängt werden können, ohne daß diese von bereits verdrängten Behältern behindert werden.

Weiterbildungen der Erfindung sind Gegenstand der Unteransprüche.

Die Erfindung wird im Folgenden anhand der Figuren an einem Ausführungsbeispiel erläutert. Es zeigen:
- Fig. 1: in vereinfachter Darstellung und in Draufsicht eine Ausführungsform der erfindungsgemäßen Vorrichtung zum Umformen eines angeförderten einspurigen Flaschenstromes in einen abzufördernden mehrspurigen Flaschenstrom, zusammen mit mehreren auf dieser Vorrichtung befindlichen Flaschen;

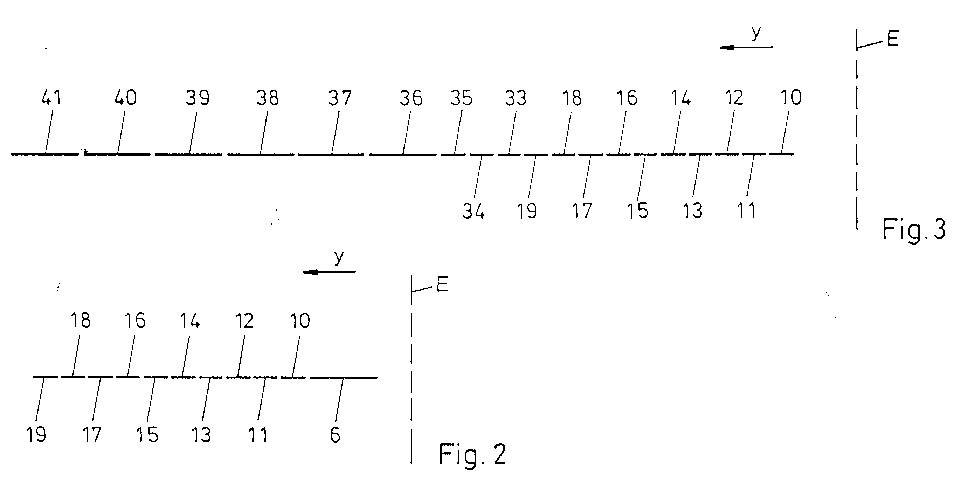

- Fig. 2 und 3: jeweils in sehr vereinfachter Darstellung die Anordnung der Förderbänder entsprechend einen Schnitt entsprechend der Linien I-I und II-II der Fig. 1.

Die in den Figuren dargestellte Vorrichtung bzw. Auseinanderführung zum Umformen eines einspurigen Flaschenstromes in einen mehrspurigen, d.h. bei der dargestellten Ausführungsform in einen sechsspurigen Flaschenstrom, besteht von der grundsätzlichen Funktion her aus dem Zuförderer 1, aus einem sich an den Zuförderer 1 anschließenden Umformbereich 2 sowie aus einem Abförderer 3, auf dem der mehrspurige Flaschenstrom abgeführt wird.

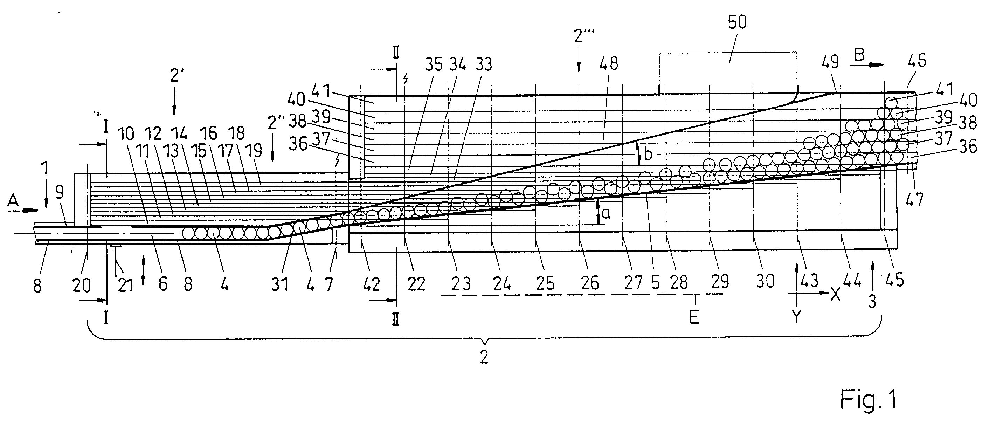

Die Förderrichtungen, mit denen die Flaschen 4 über den Zuförderer 1 zugeführt und über den Abförderer 3 abgeführt werden, sind in der Fig. 1 mit A bzw. B bezeichnet. Beide Förderrichtungen liegen in einer X-Achse, die zusammen mit einer senkrecht verlaufenden Y-Achse eine horizontale Ebene bilden, auf der die Flaschen 4 mit ihrem Boden stehend vom Zuförderer über den Umformbereich 2 an den Abförderer 3 bewegt werden, und zwar im Umformbereich 2 in Förderrichtungen mit der X-Achse einen spitzen Winkel einschließen.

Der Umformbereich 2 bildet unmittelbar an den Zuförderer 1 anschließend einen Flascheneinlauf 2', daran anschließend eine Verzögerungsstrecke 2'', auf der die Flaschen 4, die über den Zuförderer 1 jeweils voneinander beabstandet zugeführt werden, derart verzögert werden, daß sie schließlich an der Verzögerungsstrecke 2'' einen einspurigen Flaschenstrom bilden, in welchem die Flaschen 4 unmittelbar aufeinanderfolgen bzw. sich berühren. Auf die Verzögerungsstrecke 2'' folgt dann eine Umformstrecke 2''', auf der entlang eines Führungsgeländers 5 unter weiterer Verzögerung der Flaschen 4 die Umwandlung in den mehrspurigen Flaschenstrom erfolgt, und zwar dadurch, daß die die Verzögerungsstrecke 2'' verlassenden Flaschen 4 jeweils gegen das Führungsgeländer 5 zur Anlage kommen, an diesem Führungsgeländer 5 gleitend in einer Richtung bewegt werden, die sowohl eine Bewegungskomponente in der X-Achse als auch eine Bewegungskomponente in der Y-Achse einschließt. Durch Verzögerung der Fördergeschwindigkeit werden einige Flaschen 4 aus der zunächst einspurigen Flaschenreihe (primäre Flaschenreihe) am Führungsgeländer 5 seitlich, d.h. etwa in Richtung der Y-Achse herausgedrängt werden, so daß sich schließlich zusätzlich zu der dem Führungsgeländer 5 benachbarten primären Flaschenreihe eine sekundäre Flaschenreihe bildet, in der die Flaschen 4 gegen Flaschen der primären Flaschenreihe anliegen. Beim Weiterbewegen des Flaschenstromes entlang der Umformstrecke 2''' erfolgt eine weitere Reduzierung der Fördergeschwindigkeit, so daß sowohl aus der primären Flaschenreihe als auch aus der sich gebildeten sekundären Flaschenreihe weitere Flaschen in Richtung der Y-Achse vom Führungsgeländer 5 weggedrängt werden und sich somit eine zweite sekundäre Flaschenreihe usw. bildet, so daß schließlich am Ende der Umformstrecke 2''' bzw. des Umformbereichs 2 bereits ein breiter, mehrspuriger Flaschenstrom vorliegt, aus dem sich schließlich der abzufördernde Flaschenstrom bildet.

Im einzelnen sind der Zuförderer 1, der Umformbereich 2 und der Abförderer 3 aus einer Vielzahl von endlos umlaufend angetriebenen Förderbändern bzw. Scharnierbandketten gebildet und zwar:

### Zuförderer 1:

Der Zuförderer 1 besteht bei der dargestellten Ausführungsform im wesentlichen aus einem endlos umlaufend angetriebenen Förderband 6, dessen obere Länge sich in der Förderrichtung A bewegt und eine horizontale oder im wesentlichen horizontale Standfläche für die Flaschen 4 bildet.

Mit 7 ist die angetriebene Welle für die in Transportrichtung hintere Umlenkung des Förderbandes 6 bezeichnet.

Der Zuförderer 1 weist weiterhin zwei seitliche Führungsgeländer 8 und 9 für die Flaschen 4 auf. Das Förderband 6 ist ein breites Förderband, d.h. eine Scharnierbandkette mit einer Breite von 82,5 mm.

Die Fördergeschwindigkeit v1 des Förderbandes 6 des Zuförderers 1 beträgt beispielsweise 133 m/min.

### Flascheneinlauf 2'

Das Förderband 6 bildet den Flascheneinlauf 2', über den die Flaschen 4 weiterhin voneinander beabstandet der Verzögerungsstrecke 2'' zugeführt werden.
Am Flascheneinlauf 2' schließen sich in Richtung der Y-Achse an das Förderband 6 seitlich weitere Förderbänder an, d.h. bei der dargestellten Ausführungsform insgesamt neun Förderbänder 10 - 18, die jeweils schmale Förderbänder sind, d.h. Förderbänder, die eine Breite aufweisen, welche kleiner ist als der Durchmesser, den die Flaschen 4 an ihrem Boden aufweisen. Die Förderbänder 10 - 18 sind beispielsweise Scharnierbandketten mit einer Breite von 31,8 mm.

Die Förderbänder 10 - 18 sind endlos umlaufend derart angetrieben, daß sich die oberen Längen dieser Förderbänder, die zusammen mit der oberen Länge des Förderbandes 6 in einer gemeinsamen, im wesentlichen horizontalen Förderebene liegen, in Richtung der X-Achse bewegen. Mit 20 ist die gemeinsame, nicht angetriebene Welle für die vordere Umlenkung der Förderbänder 10 - 19 bezeichnet.

In der nachstehend noch näher beschriebenen Weise bilden diese Förderbänder auch die Verzögerungsstrecke 2'' und die Umformstrecke 2'''.

Auch am Flascheneinlauf 2' ist das Führungsgeländer 8 durchgehend vorgesehen, und zwar an der den Förderbändern 10 - 19 abgewandten Seite des Förderbandes 6. Das Führungsgeländer 9 fehlt am Flascheneinlauf 2' bzw. ist dort unterbrochen, so daß mit Hilfe eines Ausstoßers 21 nach bestimmten bzw. vorgegebenen Kriterien gesteuert, bestimmte Flaschen 4 aus dem einspurigen Flaschenstrom am Flascheneinlauf 2' vom Förderband 6 auf die benachbarten Förderbänder, beispielsweise auf die Förderbänder 11 und 12 geschoben werden können, um solche Flaschen 4 in der weiter unten noch beschriebenen Weise zu entfernen bzw. auszuschleusen.

Mit 22 ist eine angetriebene Welle für die gemeinsame, rückwärtige Umlenkung der Förderbänder 10 und 11 bezeichnet. Mit dieser Welle werden die Förderbänder 10 und 11 so angetrieben, daß sich die oberen Längen dieser Förderbänder in der X-Achse mit einer Geschwindigkeit v2 bewegen, die etwa 90 m/min beträgt.

23 ist die angetriebene Welle für die rückwärtige Umlenkung des Förderbandes 12, dessen obere Länge sich mit einer Geschwindigkeit v3 von etwa 83 m/min bewegt.

24 ist die angetriebene Welle für die rückwärtige Umlenkung des Förderbandes 13, dessen obere Länge sich mit einer Geschwindigkeit v4 von etwa 76 m/min bewegt.

25 ist die angetriebene Welle für die rückwärtige Umlenkung des Förderbandes 14, dessen obere Länge sich mit einer Geschwindigkeit v5 von etwa 69 m/min bewegt.

26 ist die angetriebene Welle der rückwärtigen Umlenkung des Förderbandes 15, dessen obere Länge sich mit einer Geschwindigkeit v6 im Bereich zwischen etwa 62 und 64 m/min bewegt.

27 ist die angetriebene Welle für die rückwärtige Umlenkung des Förderbandes 16, dessen obere Länge sich mit einer Geschwindigkeit v7 im Bereich zwischen etwa 55 - 58 m/min bewegt.

28 ist die angetriebene Welle der rückwärtigen Umlenkung des Förderbandes 17, dessen obere Länge sich mit einer Geschwindigkeit v8 im Bereich zwischen etwa 48 und 51 m/min bewegt.

29 ist die angetriebene Welle der rückwärtigen Umlenkung des Förderbandes 18, dessen obere Länge sich mit einer Geschwindigkeit v9 im Bereich zwischen etwa 41 und 45 m/min bewegt.

30 ist die angetriebene Welle der rückwärtigen Umlenkung des Förderbandes 19, dessen obere Länge sich mit einer Geschwindigkeit v10 bewegt, die im Bereich zwischen etwa 34 und 38 m/min liegt.

Die vorgenannten Werte für die Fördergeschwindigkeiten gelten für eine Leistung von etwa 80 000 Flaschen 4 pro Stunde.

### Verzögerungsstrecke 2''

Diese Verzögerungsstrecke 2'' ist teilweise auf dem Förderband 6 und teilweise auf den seitlich anschließenden Förderbändern 10 - 12 ausgebildet.

An der Verzögerungsstrecke 2'' sind zwei Führungsgeländer 31 und 32 vorgesehen, die zwischen sich eine Gasse für einen einspurigen Flaschenstrom bilden und die jeweils schräg zur X-Achse oder zu einer gedachten, die X-Achse und auch das Führungsgeländer 8 einschließenden vertikalen Ebene E verlaufen, d.h. mit dieser Achse oder Ebene E einen spitzen Winkel einschließen, der sich zum Abförderer 3 hin öffnet. Mit den Führungsgeländern 31 und 32 werden die Flaschen 4 vom Förderband 6 über das Förderband 10 schließlich auf die Förderbänder 11 und 12 geleitet, deren Fördergeschwindigkeit v2 bzw. v3 kleiner ist als die Fördergeschwindigkeit v1 des Zuförderers 1, so daß die Flaschen 4 am Ende der Verzögerungsstrecke 2'' in dem einspurigen Flaschenstrom unmittelbar aneinander anschließen.

Von den Förderbändern 10 - 19 liegt das Förderband 10 dem Förderband 6 unmittelbar benachbart. Ansonsten schließen die Förderbänder 10 - 19 in Richtung der Y-Achse in der Reihenfolge ihrer Bezugsziffern aneinander an, und zwar derart, daß diese Förderbänder mit zunehmender Bezugsziffer einen zunehmenden Abstand vom Förderband 6 aber auch von der Ebene E besitzen. So schließt sich beispielsweise an das Förderband 10 das Förderband 11 in Richtung der Y-Achse an, wobei in dieser Achse das Förderband 10 dem Förderband 6 und der Ebene E näher liegt als das Förderband 11 usw.

### Umformstrecke 2'''

Die Umformstrecke 2''' ist bei der dargestellten Ausführungsform von den Förderbändern 33 - 35 und den Förderbändern 36 - 41 gebildet, von denen die Förderbänder 33 - 35 den Förderbändern 10 - 19 entsprechende schmale Förderbänder, d.h. Scharnierbandketten mit einer Breite von 31,8 mm sind, während die Förderbänder 36 - 41 bei der dargestellten Ausführungsform breite, dem Förderband 6 entsprechende Förderbänder, d.h. Scharnierbandketten mit einer Breite von 82,5 mm sind. Die Förderbänder 37 - 41 sind zugleich auch Bestandteil des Abförderers 3.

Von den umlaufend angetriebenen Förderbändern 33 - 35, die sich mit ihrer oberen Länge wiederum in der X-Achse bewegen und zusammen mit den oberen Längen der Förderbänder 10 - 19 und der Förderbänder 36 - 41 in einer gemeinsamen, im wesentlichen horizontalen Transportebene liegen, schließt das Förderband 33 in der Y-Achse unmittelbar an das Förderband 19 an. Von den umlaufend angetriebenen Förderbändern 36 - 41, die sich mit ihren oberen Längen ebenfalls in Richtung der X-Achse bzw. in Förderrichtung B bewegen, schließt sich das Förderband 36 in Richtung der Y-Achse unmittelbar an das Förderband 35 an. Im übrigen weisen die Förderbänder 33 - 35 und 36 - 41 wiederum in Richtung der Y-Achse mit zunehmender Wertigkeit der diese Förderbänder bezeichnenden Bezugsziffern einen zunehmenden Abstand von dem Förderband 19 bzw. 35 und der Ebene E auf, d.h. beispielsweise das Förderband 35 ist vom Förderband 19 in dieser Achsrichtung weiter beabstandet als das Förderband 34 usw.

42 ist nicht angetriebene, gemeinsame Welle für die vorderen Umlenkungen der Förderbänder 33 - 41.
43 ist die angetriebene Welle für die rückwärtige Umlenkung des Förderbandes 33, dessen obere Länge sich mit einer Geschwindigkeit v11 bewegt, die im Bereich zwischen etwa 27 und 32 m/min liegt.

44 ist die angetriebene Welle der rückwärtigen Umlenkung des Förderbandes 34, dessen obere Länge sich mit einer Geschwindigkeit v12 bewegt, die im Bereich zwischen etwa 20 und 25 m/min liegt.

45 ist die angetriebene Welle der rückwärtigen Umlenkung der Förderbänder 35 und 36, dessen obere Länge sich mit einer Geschwindigkeit v13 bewegt, die etwa Bereich zwischen etwa 13 und 19 m/min liegt.

Mit 46 ist schließlich die gemeinsame angetriebene Welle der rückwärtigen Umlenkungen der Förderbänder 37 - 41 angedeutet, deren obere Längen sich mit einer Geschwindigkeit v14 bewegen, die etwa 10 m/min beträgt.

Der besseren Übersichtlichkeit wegen sind in der nachfolgenden Tabelle die verschiedenen Transportbänder, die zugehörigen angetriebenen Wellen sowie die zugehörigen Geschwindigkeiten v1 - v14 nochmals zusammengefaßt.

**Tabelle**

| Transportband | Welle | Geschwindigkeit in m/min |
|---|---|---|
| 6 | 7 | v1 = 133 |
| 10/11 | 22 | v2 = 90 |
| 12 | 23 | v3 = 83 |
| 13 | 24 | v4 = 76 |
| 14 | 25 | v5 = 69 |
| 15 | 26 | v6 = 62 - 64 |
| 16 | 27 | v7 = 55 - 58 |
| 17 | 28 | v8 = 48 - 51 |
| 18 | 29 | v9 = 41 - 45 |
| 19 | 30 | v10 = 34 - 38 |
| 33 | 43 | v11 = 38 - 32 |
| 34 | 44 | v12 = 20 - 25 |
| 35, 36 | 45 | v13 = 13 - 19 |
| 37 - 41 | 46 | v14 = 10 |

Wie oben bereits erwähnt, weist die Umformstrecke 2''' das Führungsgeländer 5 auf, welches die Fortsetzung des Geländers 31 der Verzögerungsstrecke 2'' bildet und sich schräg zur X-Achse erstreckt, d.h. mit dieser Achse den Winkel a einschließt, der im Bereich zwischen 5 und 15^{o} liegt, bevorzugt etwa 5,5^{o} beträgt, und der sich zum Abförderer 3, d.h. in Transportrichtung A bzw. B öffnet. Das schräg verlaufende Führungsgeländer 5 beginnt am Ende der Verzögerungsstrecke 2'' etwa dort, wo das Förderband 11 an das Förderband 10 anschließt und endet am Ende der Umformstrecke 2''' bzw. am Beginn des Abförderers 3 dort, wo das Förderband 37 an das Förderband 36 anschließt.

Die Wellen 22 - 30 und 43 - 46 weisen mit zunehmender Wertigkeit der diese Wellen bezeichnenden Bezugsziffern in Richtung der X-Achse einen zunehmenden Abstand vom Anfang der Umformstrecke 2''' bzw. vom Ende der Verzögerungsstrecke 2'' auf, wobei bei der dargestellten Ausführungsform die Wellen 22 - 30 und 43 - 45 so angeordnet und der Verlauf des schrägen Führungsgeländers 5 so gewählt ist, daß sich die den Förderbändern 11 - 19 und 33 - 35 zugeordneten rückwärtigen Umlenkungen jeweils im Bereich des Führungsgeländers 5, und zwar an der dem Flaschenstrom abgewandten und der Ebene E zugewandten Außenseite dieses Führungsgeländers befinden.

Bei der dargestellten Ausführungsform sind die Wellen 22 - 30 und 43 - 45 in der X-Achse jeweils um den gleichen Betrag voneinander beabstandet. Die Welle 42 folgt in der X-Achse auf die Welle 7. Auf die Welle 42 folgt die Welle 22.

Durch die beschriebene Ausbildung der Umformstrecke 2''' und durch die unterschiedlichen Geschwindigkeiten für die Förderbänder 13 - 19 und 33 - 41 ergibt sich eine stoß- und lärmarme Umwandlung des einspurigen Flaschenstromes in den mehrspurigen Flaschenstrom, wobei durch die beschriebene Anordnung und den beschriebenen Antrieb der Förderbänder erreicht wird, daß an der Umformstrecke 2''' die Fördergeschwindigkeit in einer Vielzahl von Stufen, nämlich bei der dargestellten Ausführungsform in wenigstens zwölf Stufen nicht nur in der X-Achse, sondern auch in der Y-Achse abnimmt, wobei sich die Fördergeschwindigkeit in der Y-Achse mit zunehmendem Abstand vom Führungsgeländer 5 verringert. Hierdurch bleiben Flaschen 4, die in der Y-Achse einen größeren Abstand vom Führungsgeländer 5 aufweisen, gegenüber solchen Flaschen 4 zurück, deren Abstand vom Führungsgeländer 5 geringer ist. Hiermit wird die Möglichkeit geschaffen, daß sich durch die Verzögerung der Fördergeschwindigkeit verdrängte Flaschen 4 vom Führungsgeländer 5 wegbewegen können, ohne daß es zu heftigen Stößen zwischen den Flaschen 4 und damit zu einer Lärmentwicklung kommt.

Besonders vorteilhaft ist weiterhin auch die Verwendung der Vielzahl der schmalen Förderbänder 10 - 19 und 33 - 35. Hierdurch wird nicht nur bei kleiner und kompakter Bauform der Vorrichtung eine Reduzierung der Fördergeschwindigkeit in einer Vielzahl von Stufen ermöglicht, sondern insbesondere auch erreicht, daß die Flaschen 4 beim Passieren der Umformstrecke 2''' mit ihrem Boden jeweils auf Förderbändern mit unterschiedlicher Geschwindigkeit aufstehen und somit auf die Flaschen 4 ein Drehmoment um ihre vertikale Flaschenachse ausgeübt wird, was ebenfalls zu einem Auflockern des Flaschenstromes und damit zu einer sanften und geräuscharmen Verbreiterung des Flaschenstromes beiträgt.

Wie die Fig. 1 zeigt, geht das schräge Führungsgeländer 5 am Ende der Umformstrecke 2''' in das Führungsgeländer 47 über, welches die der Ebene E zugewandte Seite des Abförderers 3 begrenzt.

Das Führungsgeländer 32 der Verzögerungsstrecke 2''' geht in ein Führungsgeländer 48 über, welches von der Ebene E weiter beabstandet ist als das Führungsgeländer 5 und mit der X-Achse einen Winkel b einschließt, der größer ist als der Winkel a, so daß sich die zwischen den beiden Führungsgeländern 5 und 48 an der Umformstrecke 2''' gebildete Gasse für die Flaschen 4 vom Anfang zum Ende dieser Umformstrecke hin trichterartige erweitert. Das Führungsgeländer 48 geht am Ende der Umformstrecke 2''' in ein Führungsgeländer 49 über, welches den Abförderer 3 an seiner der Ebene E abgewandten begrenzt.

Die Ausbildung ist weiter so getroffen, daß sich die Förderbänder 10 - 19 und 33 - 41 mit einer Teillänge auch an der der Ebene E abgewandten Seite der Führungsgeländer 32 und 48 erstrecken und dort insgesamt ebenfalls eine Transportebene bilden, auf der solche Flaschen 4, die mit dem Ausstoßer 21 aus dem einspurigen Flaschenstrom bzw. vom Förderband 6 auf benachbarte Förderbänder, beispielsweise auf die Förderbänder 10 - 12 übergeschoben wurden, an dieser Außenseite der Führungsgeländer 32 und 48 gleitend an einen Sammeltisch 50 bewegt werden, an dem die ausgeschleusten Flaschen 4 entnommen werden können.

Die Erfindung wurde voranstehend an einem Ausführungsbeispiel beschrieben. Es versteht sich, daß Änderungen sowie Abwandlungen möglich sind, ohne daß dadurch der die Erfindung tragende Gedanke verlassen wird. So ist es beispielsweise abweichend von der beschriebenen Ausführungsform auch möglich, anstelle des Förderbandes 36 mehrere schmale Förderbänder vorzusehen.

Die vorgenannten Geschwindigkeiten für die verschiedenen Förderbänder beziehen sich, wie oben ausgeführt, jeweils auf eine Maschinenleistung von 80 000 Flaschen 4 pro Stunde. Bei hiervon abweichenden Leistungen können auch die einzelnen Geschwindigkeiten v1 -v14 abweichend gewählt sein, wobei das Verhältnis der Geschwindigkeit zueinander allerdings erhalten bleibt.

Die Abstände, den die Wellen 7, 22 - 30 und 43 - 45 voneinander aufweisen, betragen beispielsweise 320 mm. Bei der Vielzahl der abgestuften Geschwindigkeit beträgt der jeweilige Geschwindigkeitssprung maximal 6,5 m/min.

### Bezugszeichenliste

- 1: Zuförderer
- 2: Umformbereich
- 2': Flascheneinlauf
- 2'': Verzögerungsstrecke
- 2''': Umformstrecke
- 3: Abförderer
- 4: Flasche
- 5: Führungsgeländer
- 6: Förderband
- 7: Welle
- 8, 9: Führungsgeländer
- 10 - 19: Förderband
- 20: Welle
- 21: Ausstoßer
- 22 - 30: Welle
- 31, 32: Führungsgeländer
- 33 - 35: Förderband
- 36 - 41: Förderband
- 42 - 46: Welle
- 47 - 49: Führungsgeländer
- 50: Sammeltisch

## Patentansprüche

1. Vorrichtung zum Umformen eines schmalen einspurigen Behälterstromes in einen breiten Behälterstrom, mit einem Zuförderer (1), der zum Anfördern der Behälter (4) als einspuriger Behälterstrom wenigstens ein Förderband (6) aufweist, welches für eine erste Fördergeschwindigkeit (v1) antreibbar ist, mit einem Abförderer (3), der zum Abfördern des mehrspurigen Flaschenstromes mehrere parallele Förderbänder (37 - 41) aufweist, die für eine eine gegenüber der ersten reduzierte zweite Fördergeschwindigkeit (v14) antreibbar sind, sowie mit einem zwischen dem Zuförderer (1) und dem Abförderer (3) vorgesehenen Umformbereich (2) mit einer Verzögerungsstrecke (2'') und einer Umformstrecke (2'''),
wobei die Verzögerungsstrecke zum Umformen des angeförderten Behälterstromes mit voneinander beabstandeten Behältern (4) in einen einspurigen Behälterstrom, in dem die Behälter (4) unmittelbar aneinander anschließen, von wenigstens einem Förderband (10 - 12), welches für eine gegenüber der ersten Fördergeschwindigkeit (v1) verminderte dritte Fördergeschwindigkeit (v2, v3) in einer ersten Achsrichtung (X-Achse) antreibbar ist und in einer zweiten, senkrecht zu ersten verlaufenden Achsrichtung (Y-Achse) an das Förderband (6) des Zuförderers (1) anschließt, sowie von einem ersten Führungsgeländer (31) gebildet ist, welches mit einer gedachten vertikalen Ebene (E) einen spitzen, sich zum Abförderer (3) hin öffnenden Winkel einschließt, wobei die Verzögerungsstrecke auf der dieser Ebene (E) abgewandten Seite des Führungsgeländers (31) gebildet ist,
wobei die Umformstrecke (2''') von einem Transportbereich gebildet ist, der aus einer Vielzahl von jeweils in der ersten Achsrichtung (X-Achse) fördernden und in der zweiten Achsrichtung (Y-Achse) aneinander anschließenden Förderbänder (13 - 19, 33 - 41) besteht und auf dem sich die Behälter (4) an einem zweiten Führungsgeländer aus dem einspurigen Behälterstrom für den mehrspurigen Behälterstrom formieren, welches sich schräg zur ersten Achsrichtung (X-Achse) erstreckt und mit der gedachten vertikalen Ebene (E) einen spitzen Winkel (a) einschließt, der sich zum Abförderer (3) oder zu einem den Abförderer benachbarten Ende des Umformbereiches (2) hin öffnet, wobei die Umformstrecke (2''') auf der der Ebene (E) abgewandten Seite des Führungsgeländers (5) gebildet ist und die Förderbänder (13 - 19, 33 - 41) der Umformstrecke (2''') zumindest teilweise für eine Fördergeschwindigkeit (v4 - v13) antreibbar sind, die kleiner ist als die erste Fördergeschwindigkeit (v1), um die Behälter (4) in einer sich zunächst entlang des zweiten Führungsgeländers (5) bildenden primären Behälterreihe zu verzögern und aus dieser primären Behälterreihe Behälter (4) zur Bildung weiterer, von dem Führungsgeländer (5) beabstandeter sekundärer Behälterreihen herauszudrängen, und wobei eine erste Gruppe der Förderbänder der Umformstrecke (2''') zugleich auch die Förderbänder (37 - 41) des Abförderers (3) bilden oder unmittelbar an die Förderbänder (37 - 41) des Abförderers (3) anschließen, **dadurch gekennzeichnet**, daß die Umformstrecke (2''') eine Vielzahl weiterer, eine zweite Gruppe bildende Förderbänder (13 - 19, 33 - 36) aufweist, die ebenfalls in der ersten Achsrichtung (X-Achse) fördern, in der zweiten Achsrichtung (Y-Achse) aneinander anschließen sowie Fördergeschwindigkeiten besitzen, die kleiner sind als die dritte Fördergeschwindigkeit (v2), aber größer sind als die zweite Fördergeschwindigkeit (v14), und daß in der zweiten Achsrichtung (Y-Achse) aneinander anschließende Förderbänder (13 - 19, 33 - 36) dieser zweiten Gruppe für unterschiedliche Fördergeschwindigkeiten (v4 - v13) antreibbar sind, und zwar derart, daß von zwei benachbarten Förderbändern dieser zweiten Gruppe das der gedachten Ebene (E) entfernter liegende Förderband jeweils die kleinere Fördergeschwindigkeit aufweist.

2. Vorrichtung nach Anspruch 1, dadurch gekennzeichnet, daß die Verzögerungsstrecke (2'') mehrere schmale Förderbänder (10 - 12) aufweist, die parallel zu dem wenigstens einen Förderband (6) des Zuförderers (1) oder des Behältereinlaufs (2') angeordnet sind und in der zweiten Achsrichtung (Y-Achse) an das Förderband des Zuförderers (1) sowie aneinander anschließen.

3. Vorrichtung nach Anspruch 1 oder 2, dadurch gekennzeichnet, daß die Förderbänder (10 - 19) der zweiten Gruppe der Umformstrecke (2''') zumindest teilweise schmale Förderbänder sind.

4. Vorrichtung nach Anspruch 2 oder 3, dadurch gekennzeichnet, daß die schmalen Förderbänder (10 - 19) eine Breite besitzen, die kleiner ist als der Durchmesser eines Behälterbodens, mit dem die Behälter (4) jeweils auf den Förderbändern aufstehen.

5. Vorrichtung nach einem der Ansprüche 1 - 4, dadurch gekennzeichnet, daß die Förderbänder (10 - 12) der Verzögerungsstrecke (2'') zumindest teilweise auch Förderbänder des Umformbereichs (2'''), vorzugsweise Förderbänder der zweiten Gruppe von Förderbändern des Umformbereichs (2''') sind.

6. Vorrichtung nach einem der Ansprüche 1 - 5, dadurch gekennzeichnet, daß der Winkel (a), den das zweite Führungsgeländer (5) mit der Ebene (E) bzw. mit der ersten Achsrichtung (X-Achse) einschließt, im Bereich zwischen etwa 5 - 15^{o} liegt.

7. Vorrichtung nach einem der Ansprüche 1 - 6, dadurch gekennzeichnet, daß das Verhältnis erste Fördergeschwindigkeit (v1) : dritte Fördergeschwindigkeit (v2) : zweite Fördergeschwindigkeit (v14) etwa 13:9:1 ist.

8. Vorrichtung nach einem der Ansprüche 1 - 7, dadurch gekennzeichnet, daß die Fördergeschwindigkeiten (v2 -v14) der Förderbänder (10 - 19, 33 - 36) des Umformbereichs (2) außerhalb der Verzögerungsstrecke (2'') zumindest in zwei Stufen, vorzugsweise in wenigstens sechs Stufen auf die zweite Fördergeschwindigkeit (v14) abnehmen.

9. Vorrichtung nach Anspruch 7, dadurch gekennzeichnet, daß die Fördergeschwindigkeiten der Förderbänder (13 - 19, 33 - 36) außerhalb der Verzögerungsstrecke (2'') in acht, zehn oder zwölf Stufen auf die zweite Fördergeschwindigkeit (v14) abnehmen.

10. Vorrichtung nach Anspruch 8 oder 9, dadurch gekennzeichnet, daß die Fördergeschwindigkeiten von Stufe zu Stufe jeweils um den gleichen Betrag abnehmen.

11. Vorrichtung nach einem der Ansprüche 1 - 10, dadurch gekennzeichnet, daß die Verzögerungsstrecke (2'') und/oder die Umformstrecke (2''') jeweils an der der Ebene (E) abgewandten Seite durch ein drittes Führungsgeländer (32) und/oder durch ein viertes Führungsgeländer (48) begrenzt sind, wobei das vierte Führungsgeländer (48) mit der Ebene (E) einen Winkel (b) einschließt, der größer ist als der entsprechende Winkel (a) des zweiten Führungsgeländers (5).

12. Vorrichtung nach Anspruch 11, dadurch gekennzeichnet, daß an der der Ebene (E) abgewandten Seite des dritten und vierten Führungsgeländers (32, 48) ein von mehreren parallelen Förderbändern, vorzugsweise von den Förderbändern (10 - 19, 33 - 41) des Umformbereichs (2) gebildeter Transportbereich vorgesehen ist, über den aus dem zugeführten Behälterstrom ausgeleitete oder ausgestoßene Behälter (4) an einem Sammeltisch (50) gefördert werden.

13. Vorrichtung nach Anspruch 12, dadurch gekennzeichnet, daß der Umformbereich (2) der Verzögerungsstrecke (2'') vorausgehend einen Behältereinlauf (2') bildet, an der eine Einrichtung (21) zum Ausstoßen oder Ausschleusen von Behältern (4) vorgesehen ist.

14. Vorrichtung nach einem der Ansprüche 1 - 13, dadurch gekennzeichnet, daß das erste und zweite Führungsgeländer (31, 5) getrennte Führungsgeländer sind.

15. Vorrichtung nach einem der Ansprüche 1 - 13, dadurch gekennzeichnet, daß das erste und zweite Führungsgeländer von einem gemeinsamen Führungsgeländer gebildet sind.

16. Vorrichtung nach einem der Ansprüche 1 - 15, dadurch gekennzeichnet, daß das zweite Führungsgeländer (5) an der der Ebene (E) zugewandten Längsseite des Abförderers (3) endet.

17. Vorrichtung nach einem der Ansprüche 1 - 16, dadurch gekennzeichnet, daß die Förderbänder (10 - 19, 33 - 36) des Umformbereichs (2) rückwärtige Umlenkungen aufweisen, die zumindest teilweise außerhalb des Umformbereichs (2) und seitlich von dem zweiten Führungsgeländer (5) vorgesehen sind.
